# EUROPEAN PATENT APPLICATION

(11) **EP 2 568 701 A1**
(43) Date of publication of application: **13.03.2013**
(21) Application number: 12167857.7
(22) Date of filing: 14.05.2012
(51) Int. Cl.: H04N 5/76, H04N 5/775, G11B 27/00

(54) **Method and apparatus for storing a broadcast**

(30) Priority: 06.09.2011 KR 20110090058
(71) Applicant: Samsung Electronics Co., Ltd., Suwon-si, Gyeonggi-do, 443-742 (KR)
(72) Inventor: Park, Jung-il, Gyeonggi-do (KR)
(74) Representative: Davies, Robert Ean

(57) **Abstract**

A method and apparatus for storing a broadcast are disclosed. The broadcast storing apparatus includes a broadcast receiver which receives a broadcast signal; a storage unit which stores a broadcast signal; and a controller which stores a broadcast signal in the storage unit in response to a storage function being set up for storing a received broadcast signal. The broadcast storing apparatus deletes a part of the stored broadcast signal on the basis of event information related to storage of the broadcast signal. Thus, there are provided a method and apparatus for storing a broadcast, in which a highlight scene is effectively stored while saving storage space.

## Description

### BACKGROUND

### 1. Field

Apparatuses and methods consistent with the exemplary embodiments relate to an apparatus and method for storing a broadcast, and more particularly to a method and apparatus for storing a broadcast, which enables schedule recording.

### 2. Description of the Related Art

A personal video recorder (PVR), or the like, image reproducing apparatus is largely used in reproducing a moving picture which is generally stored in a storage device, so that a user can view it through a display apparatus, which has the functions of decoding and outputting encoded video data. With recent developments in networks, digital storage devices, and image compression and restoration technologies, there has been wide spread use of an apparatus that stores a digital image in the storage device and reproduces the digital image.

In the case of recording a moving picture of sports such as soccer, or the like, which take almost two hours per game, a function is needed forselecting, easily and quickly reproducing, and editing only parts of a game such as a scoring scene, an important shooting scene, etc., within the moving picture, when reproducing the moving picture.

In current highlight editing, in response to a highlight being generated while a video is repetitively recorded on a periodic basis, a corresponding scene is edited for reproduction. In this case, there is difficulty in properly recording a highlight scene because it is unpredictable as to when the highlight is to be repetitavely generated. In response to the highlight being generated at an end point of the period of time in which the recording is repeated, the generation of highlight itself may not be detected. Also, the problem exists that development of a video is unnatural as a result of the scene after the highlight is generated being mostly edited.

### SUMMARY

Accordingly, one or more exemplary embodiments provide a method and apparatus for storing a broadcast, which can effectively store a highlight scene while saving storage space.

Another exemplary embodiment provides a method and apparatus for storing a broadcast, which can freely edit a highlight scene.

The foregoing and/or other aspects may be achieved by providing a broadcast storing apparatus including: a broadcast receiver which receives a broadcast signal; a storage unit which stores a broadcast signal; and a controller which stores a broadcast signal in the storage unit in response to a storage function being set up for storing a received broadcast signal, and deletes a part of the stored broadcast signal on the basis of event information which is related to storage of the broadcast signal.

The broadcast storing apparatus may further include an information receiver which receives time information about a highlight of the broadcast signal as the event information from an external server.

The controller may delete a broadcast signal that has been received at a predetermined time prior to the time when the event information is received from among the stored broadcast signals.

The controller may receive, in sequence, first event information and second event information from the information receiver, and may delete a broadcast signal that has been received at a predetermined time prior to the time when the second event information is received, after a lapse of a predetermined time from the time when the first event information is received, from among the stored broadcast signals.

In order to generate the event information, the controller may transmit preset highlight information to the server.

The controller may transmit information about the magnitude of an audio signal of the broadcast signal to the server in order to generate the event information.

The broadcast signal may include at least one of an audio signal, subtitle information and data information, and the controller may generate the event information from information about the time when the broadcast signal is received, in response to the at least one of the audio signal, the subtitle information and the data information containing preset highlight information.

The controller may delete a broadcast signal that has been received at a predetermined time prior to the time when the event information is generated, from among the stored broadcast signals.

The controller may generate, in sequence, first event information and second event information, and delete a broadcast signal that has been received at a predetermined time prior to the time when the second event information is generated, after a lapse of predetermined time from the time when the first event information is generated, from among the stored broadcast signals.

The broadcast storing apparatus may further include a user interface for generating the highlight information.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a control block diagram of a broadcast storing apparatus according to an exemplary embodiment;
FIG. 2 is a control block diagram of a broadcast storing apparatus according to another exemplary embodiment;
FIG. 3 is a view for explaining deletion of a broadcast signal in the broadcast storing apparatus of FIG. 2;
FIG. 4 is a control flowchart for explaining a broadcast storing method of FIG. 2;
FIG. 5 is a control block diagram of a broadcast storing apparatus according to still another exemplary embodiment; and
FIG. 6 is a control flowchart for explaining a broadcast storing method of FIG. 5.

### DETAILED DESCRIPTION OF EXEMPLARY EMBODIMENTS

Below, exemplary embodiments will be described in detail with reference to accompanying drawings so as to be easily understood by a person having ordinary knowledge of the art. The exemplary embodiments may be embodied in various forms without being limited to the exemplary embodiments set forth herein. Descriptions of well-known parts are omitted for clarity, and like reference numerals refer to like elements throughout.

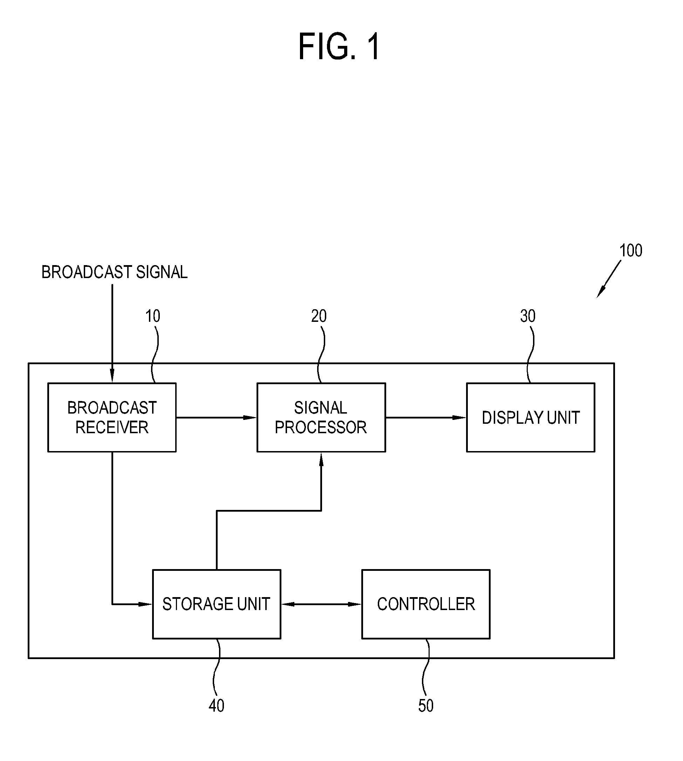

FIG. 1 is a control block diagram of a broadcast storing apparatus according to an exemplary embodiment;

As shown therein, a broadcast storing apparatus 100 in this exemplary embodiment includes a broadcast receiver 10, a signal processor 20, a display unit 30, a storage unit 40, and a controller 50. The broadcast storing apparatus 100 may include a computer, a mobile device, a television (TV) connectable to a wired/wireless network, i.e., an Internet protocol TV or a digital multimedia broadcasting terminal, or like device, which can receive and reproduce a broadcast signal. The mobile device may be a mobile device such as a cellular phone, a smart phone, a personal digital assistant (PDA), a portable multi-media player (PMP), and a navigation device. The broadcast storing device 100 may further include a user input unit such as a button, an input pad or a remote controller, etc.

The broadcast receiver 10 receives a broadcast signal that is receivable through broadcast services such as a terrestrial broadcast, a satellite broadcast, a cable broadcast, an Internet broadcast, a digital multimedia broadcast, etc. The broadcast signal may contain contents such as an audio signal and a video signal, various data and appendix signal for describing the contents, and subtitle information corresponding to the broadcast signal. The broadcast receiver 10 may include at least one of a tuner, a network interface, a set-top box connector, a cable connector, etc., which has a channel tuning function for receiving a broadcast signal as above.

The signal processor 20 performs a predetermined video process where a broadcast signal is processed for display on the display unit 30. The signal processor 20 may include a video processor (not shown) and an audio processor (not shown), and may perform demultiplexing, decoding, scaling, image quality adjustment, image quality enhancement, etc.

The display unit 30 displays a received broadcast signal or a broadcast signal stored in the storage unit 40 (to be described later). The display unit 30 may include a liquid crystal display (LCD) panel with liquid crystal, an organic light emitting diode (OLED) panel with an OLED, a flexible display, a three-dimensional (3D) display, etc., and include a panel driver for driving the panel.

The storage unit 40 stores a broadcast signal received under the control of the controller 50. The storage unit 40 may be achieved by a hard disk drive (HDD) used when a PVR function is executed, a non-volatile memory such as a flash memory, etc. The storage unit 40 may be internally provided in the broadcast storing apparatus 100, but may be achieved by a movable memory detachable through a predetermined connector. Also, the storage unit 40 may include a first storage unit where the received broadcast signal is stored, and a second storage unit where a broadcast signal is finally stored after some of the broadcast signals stored in the first storage unit are deleted. That is, the storage unit 40 may include plural storage units, according to the functions to be provided. The number of storage units is not limited.

The controller 50 stores a broadcast signal in the storage unit 40 in response to a storing function for storing the received broadcast signal, i.e., a schedule recording function being set up, and deletes some of the stored broadcast signals on the basis of event information related to storage of the broadcast signal. In response to a user being unable to view a broadcast at a time when the broadcast signal is received, the broadcast signal may be stored by the schedule recording function. Although all of the broadcast signals are stored, a user may want to only view a highlight portion rather than all of the stored broadcast signals. For example, in response to the broadcast signal being related to sport games such as soccer, baseball, etc. or a program of deciding ranking or showing results, a user may already know the scoring, the ranking or the results and may therefore want to only view the highlight portions rather than all of the recorded broadcast. In this exemplary embodiment, event information may include time information about the highlight portions to be set up by a user or to be set up corresponding to a certain broadcast signal. The time information may be information about a certain point of time or information about a period from a first point of time to a second point of time. The controller 50 may delete some of the stored broadcast signals on the basis of the event information. For example, the controller may delete all but the broadcast signals stored within predetermined times before and after the time included in the event information. If the event information is related to a certain time, the controller 50 may delete all but the broadcast signals stored within 10 seconds before and 10 seconds after the certain time. Thus, the controller 50 in this exemplary embodiment deletes all but the highlight parts from among the stored broadcast signals, thereby saving storage space of the storage unit 40 and reproducing only a broadcast signal which corresponds to a user's requirements.

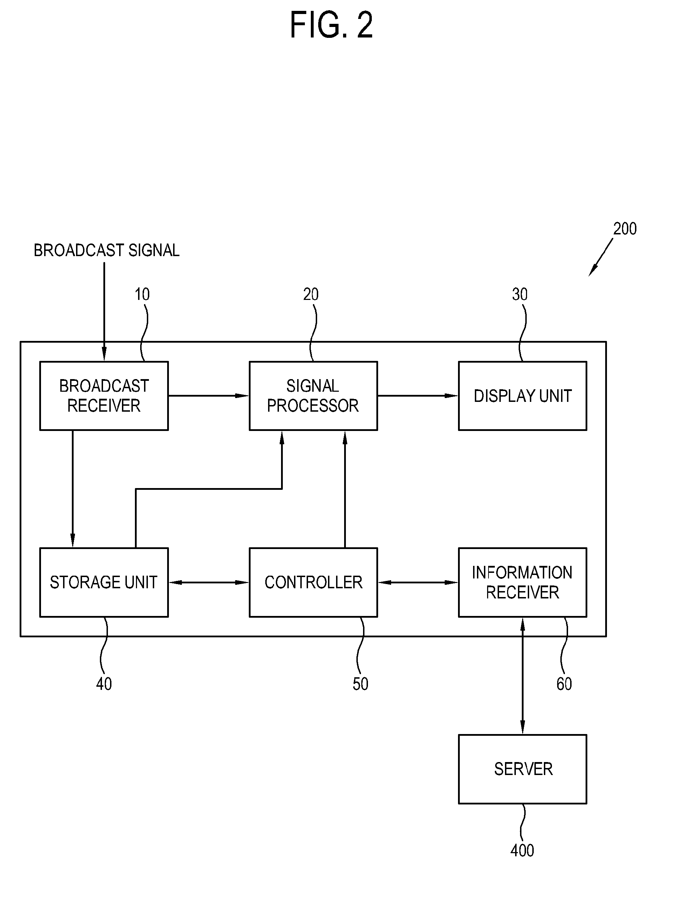

FIG. 2 is a control block diagram of a broadcast storing apparatus according to another exemplary embodiment.

As shown therein, a broadcast storing apparatus 200 in this exemplary embodiment may further include an information receiver 60 which receives time information about a highlight of the broadcast signal, as the event information, from an external server 400.

The server 400 may be a content provider based on Internet, which can provide the event information to the broadcast storing apparatus 200. The server 400 may be achieved by a server of a portal site or an Internet server of a broadcast station. The server 400 may provide information desired by the broadcast storing apparatus 200 while communicating with the broadcast storing apparatus 200 through an open application interface (API). The server 400 includes information about a broadcast signal currently being transmitted from the broadcasting station to the broadcast storing apparatus 200, i.e., information about a specific broadcast program. Also, the server 400 has prior or preset arrangements with regard to information to be transmitted to the broadcast storing apparatus 200, and thus transmits the event information to the broadcast storing apparatus 200 when a promised event is generated.

The information receiver 60 may be an interface for receiving a variety of information and contents through the Internet, or like web network, and the information receiver 60 in this exemplary embodiment receives time information about highlights. The information receiver 60 is illustrated as one block in order to functionally explain an element for receiving signals, other than the broadcast signal, received in the broadcast receiver 10. Also, the information receiver 60 asks the server 400 for preset highlight information and receives corresponding event information under the control of controller 50.

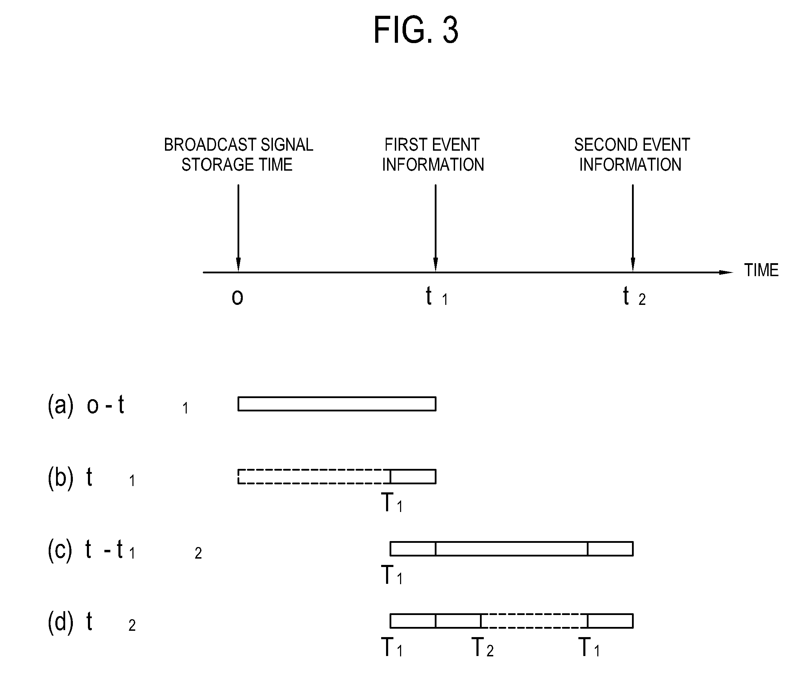

The event information provided by the server 400 is the time information related to the broadcast signal, and provides sign information, such as a flag, at a certain time. The flag received through the information receiver 60 is recognized by the controller 50, and the controller 50 may delete some of the stored broadcast on the basis of the flag. FIG. 3 is a view for explaining the deletion of a broadcast signal in the broadcast storing apparatus of FIG. 2. In response to a user selecting a schedule recording function, the controller 50 stores the broadcast signal received through the broadcast receiver 10 in the storage unit 40. For example, assume that video signals about soccer are received as the broadcast signals. The server 400 may transmit the event information, i.e., a flag signal to the broadcast storing apparatus 200 in response to words such as a shot, a yellow card, a corner kick, a penalty kick, etc., is generated. The broadcast signal is stored from the time of starting storing the broadcast signal to first time t1 of receiving first event information, i.e., for 0 - t1 (refer to (a)). Then, in response to the first event information being received at the first time t1, the controller 50 deletes the broadcast signal that has been received predetermined time T1 prior to the time t1 when the first event information is received (refer to (b)). The broadcast signals received after deleting some of the broadcast signals are successively stored (refer to (c)). Then, in response to second event information being received at a second time t2, the controller 50 deletes the broadcast signal that has been received at predetermined time T1, prior to the time t2 when the second event information is received after a lapse of predetermined time T2 from the time t1 when the first event information is received (refer to (d)). Thus, only the broadcast signals stored within time before and after the highlight is generated remain in the storage unit 40, and the broadcast signals between the event information are deleted. Through this, a user can advantageously view how a desired highlight scene was started and ended, i.e., its development. In a conventional case, it is possible to store only a certain highlight scene, and it is vague how to set the highlight scene from where to where. Further, in a conventional case, only the broadcast signals after a highlight such as scoring a goal are generally stored, and therefore a user cannot view the development of the important scene. However, the present exemplary embodiment remedies the conventional shortcomings, and has an advantage that editing is possible with regard to a highlight video desired by a user. The predetermined time T1 and T2 may be a default value, but may be set up by a user. Further, T1 and T2 may be the same, but may also be different from each other.

According to another exemplary embodiment, a user may transmit highlight information about conditions for receiving the event information in accordance with a specific program, to the server 400. For example, to receive event information in response to a certain word or information being present in an audio signal, subtitle information, and data information of a broadcast signal, the server 400 may be informed of this so as to transmit the event information. For example, a user may provide terms to a server 400 such as a shot, scoring a goal, or the like, or may give server 400 a name of a player or a specific word. The server 400 may transmit the event information to the broadcast storing apparatus 200 in response to the highlight information received from the broadcast storing apparatus 200 being grasped while monitoring the broadcast signal.

According to still another exemplary embodiment, the server 400 may transmit the event information to the broadcast storing apparatus 200 at a point of time when the magnitude of an audio signal is higher than a predetermined value, while monitoring the magnitude of the audio signal of the broadcast signal. Most of important or highlight broadcast signals contain an audio signal higher than a common magnitude. Therefore, in response to the audio signal exceeding a predetermined magnitude, it may be determined as highlight information and given to the broadcast storing apparatus 200. The broadcast storing apparatus 200 may provide to the server 400 information about the magnitude of the audio signal as the highlight information.

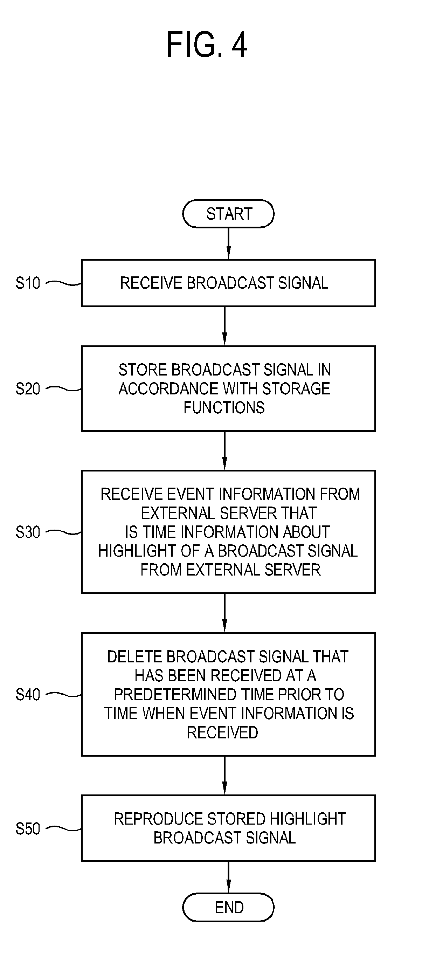

FIG. 4 is a control flowchart for explaining a broadcast storing method of FIG. 2.

First, at operation S10, a broadcast signal is received. The broadcast signal may contain video and audio signals, and may further include subtitle information and data information.

At operation S20, the controller 50 stores the broadcast signal in accordance with storage functions previously set up by a user. Of course, in this exemplary embodiment, a user may additionally set up a function for storing only the highlight scene together with the storage functions.

At operation S30, the information receiver 60 receives from the external server 400 event information that is time information about a highlight of the broadcast signal, while storing the broadcast signal.

At operation S40, the controller 50 deletes the broadcast signal that has been received at a predetermined time T1 prior to the time when the event information is received. That is, all but the broadcast signals stored within predetermined times before and after the time when the event information is received are deleted, so that continuity around the highlight scene can be secured to thereby allow a user to view only a desired portion.

At operation S50, the controller 50 reproduces only the stored highlight broadcast signal in response to a user requesting the stored broadcast signal to be reproduced.

Alternatively, in response to the highlight storage function being set up, the controller 50 displays the received event information in the storage unit 40 and reproduces only a part of the broadcast signal when a user requests the reproduction. Also, in response to the reproduction being requested, some of the broadcast signals may be deleted and the others may be reproduced.

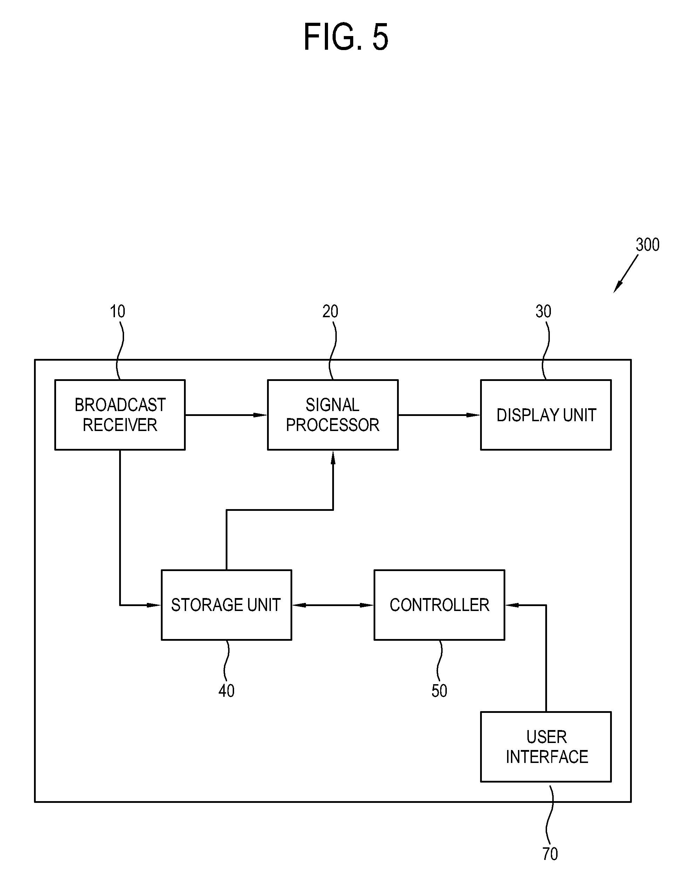

FIG. 5 is a control block diagram of a broadcast storing apparatus according to still another exemplary embodiment.

In this exemplary embodiment, a broadcast storing apparatus 300 further includes a user interface 70 for generating highlight information. The user interface 70 may include a touch screen merged into the display unit 30 as an interface for a user' input, and may be achieved by a button provided in the broadcast storing apparatus 300 or by a remote controller separated from the broadcast storing apparatus 300. Through the user interface 70, a user may set up certain words or may set a magnitude of an audio signal as the highlight information, and may modify the setup highlight information.

The controller 50 determines whether the audio signal, subtitle information or data information contained in the received broadcast signal includes the preset highlight information. In response to the highlight information being included in the broadcast signal, the controller 50 generates event information based on information about the time when the broadcast signal is received. The event information may include a flag as a sign of the time when the broadcast signal is received.

The controller 50 may delete the broadcast signal that has been received at a predetermined time prior to the time when the event information is generated from among the stored broadcast signals. Also, upon many determinations that the broadcast signal includes the highlight information, and thus, a plurality of event information such as first event information and second event information is generated. The controller 50 deletes the broadcast signal that has been received at a predetermined time prior to the time when the second event information is generated after a lapse of predetermined time from the time when the first event information is generated.

Although it is not shown, the broadcast storing apparatus 300 may further include a determiner for determining whether the broadcast signal is received with the highlight information. Such a determiner may be provided as an independent element, or may be a function of the controller 50.

Such a function of determination of whether the broadcast signal contains the highlight information and deleting some of the stored broadcast signals according to determined results, may be achieved by an application program installed in the broadcast storing apparatus 300. Through the application program, the highlight information may be set up, modified and deleted, and the time T1, T2 for the stored broadcast signal may be adjusted. Also, such an application program may be upgraded to a newer version.

According to another exemplary embodiment, the highlight information may not be set up by a user but may be previously set as a default when the broadcast storing apparatus is manufactured or programmed.

According to still another exemplary embodiment, the broadcast storing apparatus 300 may provide a graphic user interface (GUI) through which a user can select his/her favorite highlight information from among default highlight information. In these exemplary embodiments, the controller 50 may generate the event information in response to the setup highlight information being grasped while storing the received broadcast signal.

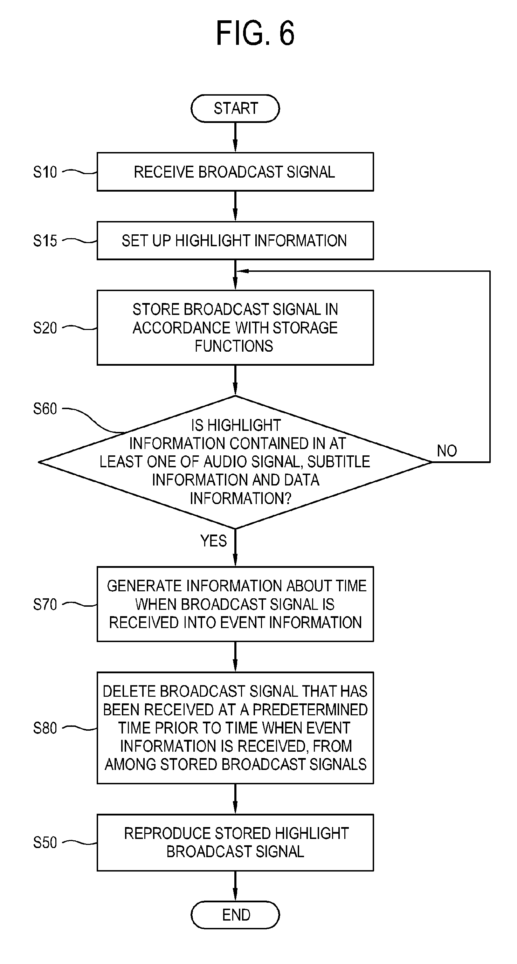

FIG. 6 is a control flowchart for explaining a broadcast storing method of FIG. 5. Referring to FIG. 6, the broadcast storing method in this exemplary embodiment is as follows.

At operation S10, the broadcast signal is received.

At operation S15, a user sets up the highlight information related to a highlight from among signals contained in the broadcast signal, and sets up the storage function for storing the broadcast signal, according to the present exemplary embodiment.

At operation S20, the broadcast storing apparatus 300 stores the broadcast signal in accordance with the setup storage functions.

It will be appreciated that the highlight information is set up or the storage functions are set up before the broadcast signal is received, and alternatively they may be set up while a user is viewing the received broadcast signals.

At operation S60, the controller 50 determines whether the highlight information is contained in at least one of the audio signal, subtitle information and data information, of the broadcast signal.

In response to a determination that at least one of the audio signal, subtitle information and data information of the broadcast signal contains the highlight information, at operation S70, the controller 50 generates information about the time when the broadcast signal is received into the event information.

Then, at operation S80, the controller 50 deletes the broadcast signal, which has been received at a predetermined time prior to time when the event information is generated, from among the stored broadcast signals, thereby storing only the broadcasting signal corresponding to the highlight information.

Thereafter, in response to receiving a request signal for reproducing the broadcast signal from a user, at operation S50, the controller 50 reproduces the stored highlight broadcast signal.

As described, there are provided an apparatus and method for storing a broadcast, which can effectively store a highlight scene while saving storage space.

Further, a method and apparatus are provided for storing an image, which can freely edit a highlight scene.

Although a few exemplary embodiments have been shown and described, it will be appreciated by those skilled in the art that changes may be made in these exemplary embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast storing apparatus comprising:
a broadcast receiver which receives a broadcast signal;
a storage unit which stores a received broadcast signal; and
a controller which stores a broadcast signal in the storage unit in response to a storage function being set up for storing a received broadcast signal, and deletes a part of the stored broadcast signal on the basis of event information related to storage of the broadcast signal.

2. The broadcast storing apparatus according to claim 1, further comprising an information receiver which receives from an external server, time information about a highlight of the broadcast signal as the event information.

3. The broadcast storing apparatus according to claim 2, wherein the controller deletes a broadcast signal that has been received at a predetermined time prior to the time when the event information is received from among the stored broadcast signals.

4. The broadcast storing apparatus according to claim 2, wherein the controller receives from the information receiver, in sequence, first event information and second event information, and deletes a broadcast signal that has been received at a first predetermined time prior to the time when the second event information is received after a lapse of a second predetermined time from time when the first event information is received, from among the stored broadcast signals.

5. The broadcast storing apparatus according to claim 2, wherein the controller transmits at least one of preset highlight information and information about a magnitude of an audio signal of the broadcast signal to the server in order to generate the event information.

6. The broadcast storing apparatus according to claim 1, wherein the broadcast signal comprises at least one of an audio signal, subtitle information and data information, and
the controller generates the event information from information about a time when the broadcast signal is received, in response to the at least one of the audio signal, the subtitle information and the data information which contains preset highlight information.

7. The broadcast storing apparatus according to claim 6, wherein the controller deletes a broadcast signal that has been received at a predetermined time prior to the time when the event information is generated from among the stored broadcast signals.

8. The broadcast storing apparatus according to claim 7, wherein the controller generates in sequence, first event information and second event information, and deletes a broadcast signal that has been received at a predetermined time prior to the time when the second event information is generated after a lapse of predetermined time from the time when the first event information is generated, from among the stored broadcast signals.

9. A broadcast storing method comprising:
receiving a broadcast signal;
storing the received broadcast signal in accordance with a storage function for storing a received broadcast signal; and
deleting a part of the stored broadcast signal on the basis of event information related to storage of the broadcast signal.

10. The broadcast storing method according to claim 9, further comprising receiving from an internal server time information about a highlight of the broadcast signal as the event information.

11. The broadcast storing method according to claim 10, wherein the deleting a part of the broadcast signal comprises deleting a broadcast signal that has been received at a predetermined time prior to the time when the event information is received from among the stored broadcast signals.

12. The broadcast storing method according to claim 10, wherein the receiving time information about a highlight of the broadcast signal comprises receiving first event information and second event information in sequence, and
the deleting a part of the broadcast signal comprises deleting a broadcast signal that has been received from among the stored broadcast signals at a first predetermined time prior to the time when the second event information is received after a lapse of a second predetermined time from the time when the first event information is received.

13. The broadcast storing method according to claim 10, further comprising at least one of transmitting preset highlight information to the server in order to generate the event information and transmitting to the server information about a magnitude of an audio signal of the broadcast signal in order to generate the event information.

14. The broadcast storing method according to claim 9, wherein the broadcast signal comprises at least one of an audio signal, subtitle information and data information,
the method further comprising generating the event information from information about time when the broadcast signal is received, in response to the at least one of the audio signal, the subtitle information and the data information containing preset highlight information.

15. The broadcast storing method according to claim 14, wherein the deleting a part of the broadcast signal comprises deleting a broadcast signal that has been received at a predetermined time prior to the time when the event information is generated from among the stored broadcast signals.
